# EUROPEAN PATENT SPECIFICATION

(11) **EP 4 631 007 B1**
(45) Date of publication and mention of the grant of the patent: **09.09.2026**
(21) Application number: 23844554.8
(22) Date of filing: 05.12.2023
(51) Int. Cl.: G06V 10/26, G06F 18/23213, G06T 7/11, G06T 7/12, G06T 7/136

(54) **A METHOD FOR SEGMENTATION - BASED X-RAY IMAGE COLLIMATION AREA DETECTION AND ANATOMICAL AREA DECOMPOSITION**
VERFAHREN ZUR SEGMENTIERUNGSBASIERTEN RÖNTGENBILDKOLLIMATIONSBEREICHSDETEKTION UND ANATOMISCHEN BEREICHSZERLEGUNG
PROCÉDÉ DE DÉTECTION DE ZONE DE COLLIMATION D'IMAGE RADIOGRAPHIQUE BASÉE SUR UNE SEGMENTATION ET DÉCOMPOSITION DE ZONE ANATOMIQUE

(30) Priority: 05.12.2022 TR 202218538
(43) Date of publication of application: 15.10.2025
(73) Proprietor: Aselsan Elektronik Sanayi ve Ticaret Anonim Sirketi, 06200 Ankara (TR)
(72) Inventor: ELMAS, Gökberk, Yenimahalle/Ankara (TR); KAYGUSUZ, Dogukan, Yenimahalle/Ankara (TR); YANAR, Erdem, Çankaya/Ankara (TR)
(74) Representative: Yamankaradeniz, Kemal
(86) International application number: PCT/TR2023/051465
(87) International publication number: WO 2024/123294

(56) References cited:
- EP-A1- 0 742 536
- US-A1- 2005 018 893
- US-A1- 2006 110 068
- LUO H ET AL: "Robust Online Orientation Correction for Radiographs in PACS Environments", IEEE TRANSACTIONS ON MEDICAL IMAGING, IEEE, USA, vol. 25, no. 10, 1 October 2006 (2006-10-01), pages 1370 - 1379, XP001545743, ISSN: 0278-0062, DOI: 10.1109/TMI.2006.880677
- LUO J ET AL: "AUTOMATIC DETECTION OF RADIATION FIELDS IN DIGITAL RADIOGRAPHIC IMAGES", INTERNATIONAL JOURNAL OF PATTERN RECOGNITION AND ARTIFICIAL INTELLIGENCE (IJPRAI), WORLD SCIENTIFIC PUBLISHING, SI, vol. 13, no. 1, 1 February 1999 (1999-02-01), pages 149 - 167, XP000802321, ISSN: 0218-0014, DOI: 10.1142/S0218001499000094
- "Handbook of image and video processing", 1 January 2001, SAN DIEGO, CALIF. [U.A.] : ACADEMIC PR, US, article A BOVIC: "Handbook of Image and Video Processing", pages: 425 - 426, XP055613577

## Description

### Technical Field

The invention relates to a method for segmentation - based x-ray image collimation area detection and anatomical area decomposition, comprising blocks of consecutively cascaded k-means in a manner independent of the x-ray protocol and blocks of morphological operations used to regularize the segmentation results.

### Prior Art

Radiography is the first imaging method starting with the discovery of x-rays. It is widely used since the discovery of X-rays. Imaging is provided by means of the penetration property of x-rays. The basic principle of radiography is to create an image over an area by passing x-rays through all body layers.

Collimation area application is the management of limiting x-ray scattering used in x-ray imaging to reduce the dose received by the patient to be imaged. The unit that performs the collimation process in the x-ray machine is called the collimator and consists of 2 sets of lead blades, each pair moving in the same axis - in different directions. The collimation area refers to the part that is not shadowed by the lead blades and appears as a polygon with at least four sides in the x-ray image depending on the position of the x-ray detector. However, the collimation area is not mandatory and may be absent from the x-ray image at the discretion of the x-ray imaging technician.

Segmentation is the process of creating homogeneous image objects (segments) based on the defining characteristics of the image. In the segmentation process, the image objects should correspond to the real earth objects of interest. Segmentation and feature detection are the basis of classification, and segmentation is the most important stage of object - based classification. Since the region outside the collimation area, the anatomical area and the direct exposure areas constitute fundamentally different image classes in the X-ray image, the use of segmentation - based approaches to detect these regions allows the development of algorithms independent of the x-ray protocol.

With digitalization in direct x-ray imaging, gains such as direct exposure through collimation and segmentation of anatomical regions are obtained on the image obtained with various image processing algorithms. However, when considering the radiological workflow, algorithms that provide fast and accurate results gain importance. The easiest and fastest method to generate different segmentation clusters is thresholding, and in [1] an adaptive version of it was applied independently of the x-ray protocol (the anatomical region being imaged, e.g. chest X-ray). However, the adaptive threshold updating method assumes that edge transitions between direct exposure- anatomy and between anatomy-collimation regions are sharp and at different speeds. The candidate segmentation edge transition detection algorithm requires processing each row and column of the x-ray image individually, which is very resource-intensive considering that an average X-ray image consists of approximately 6-7 million pixels. Furthermore, taking into account the scattering geometry of X-rays and the thickness of the imaged patient, it is observed that the edge transition speed between different regions are quite close to each other. On the other hand, although the method used is documented as x-ray protocol - independent, article [0018] of the related patent [1] states that segmentation performance improves when optimized according to the x-ray acquisition protocol, and since adaptive thresholding is not sufficient, a region growing algorithm is used to cover the deficiencies in the segmentation masks on top of the thresholding result.

As in [1], [2] assumes that the transitions speed and length between different segmentation areas in the x-ray image will be different from each other. Unlike adaptive thresholding, super - pixels belonging to 10 different classes are created in the x-ray image and an algorithm based on edge transitions between super - pixels is used, which is not only faster but also better reflects the relationship between pixels. However, this method assumes that the transition between different segmentation areas has different characteristics, and the deficiencies in the collimation area over super - pixels are compensated by the region growing algorithm, which is computationally expensive.

Unlike [1] and [2], instead of the thresholding approach that adapts to the transition between segmentation areas, [3] and [4] methods use a line scoring method that uses an edge detection filter on the x-ray image and when combined with the Hough transform, the edges with the longest linearity are considered as collimation edges. Although the accuracy of methods using the Hough transform is known to be higher than that of thresholding algorithms, the use of this method assumes that there is a collimation area in the x-ray image. In the absence of a collimation area, thresholding - based methods can detect the absence of collimation, whereas in [3] and [4] extra solutions are required. As a result of the relevant research, application EP742536B1 was found. The application relates to a method for recognizing one or more irradiation areas. The application mentions a method for automatically determining the position of the boundary between multiple exposures and between the signal and shadow regions within each exposure. However, the application does not mention the steps of image subsampling, adding virtual collimation, performing 3-center k-means segmentation, initial collimation mask detection, estimated collimation blade detection, 2-center k-means segmentation of areas outside the collimation blade, morphological structural element creation with adaptive variance thresholding, completion of 3-center segmentation areas with morphological image occlusion, and anatomical direct exposure area decomposition with 2-center k-means segmentation.

### Documents

- EP 0 742 536 A1 (AGFA GEVAERT NV [BE]) 13 November 1996 (1996-11-13)
- US 2006/110068 A1 (LUO HUI [US] ET AL) 25 May 2006 (2006-05-25)
- US 2005/018893 A1 (WANG XIAOHUI [US] ET AL) 27 January 2005 (2005-01-27)
- LUO H ET AL: "Robust Online Orientation Correction for Radiographs in PACS Environments", IEEE TRANSACTIONS ON MEDICAL IMAGING, IEEE, USA, vol. 25, no. 10, 1 October 2006 (2006-10-01), pages 1370-1379, XP001545743, ISSN: 0278-0062, DOI: 10.1109/TMI.2006.880677
- LUO J ET AL: "AUTOMATIC DETECTION OF RADIATION FIELDS IN DIGITAL RADIOGRAPHIC IMAGES", INTERNATIONAL JOURNAL OF PATTERN RECOGNITION AND ARTIFICIAL INTELLIGENCE (IJPRAI), WORLD SCIENTIFIC PUBLISHING, SI, vol. 13, no. 1, 1 February 1999 (1999-02-01), pages 149-167, XP000802321, ISSN: 0218-0014, DOI: 10.1142/ S0218001499000094
- "Handbook of image and video processing", San Diego, Calif. [u.a.] : Academic Pr, 1 January 2001 (2001-01-01), pages 425-426, XP055613577 further represent the prior art.

Consequently, due to the above - mentioned drawbacks and the inadequacy of the existing solutions, a development in the relevant technical area has become necessary.

### Purpose of Invention

The invention is inspired by the current state of the art and aims to solve the aforementioned drawbacks.

The main purpose of the invention is to provide extra collimation area detection independent of x-ray acquisition protocols, segmentation - based x-ray image area detection and anatomical area decomposition with fast results by means of subsampling.

In order to fulfill the aforementioned purposes, the invention provides a segmentation - based x-ray image collimation area detection and anatomical area decomposition method, according to the appended claim 1.

The structural and characteristic features and all advantages of the invention will be more clearly understood by means of the figures given below and the detailed description written with references to these figures, and therefore, the evaluation should be made by considering these figures and detailed description.

### Figures to Help Understanding of the Invention

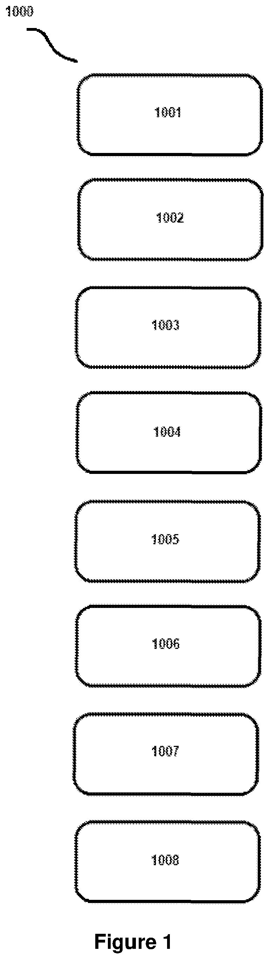

**Figure 1** shows the flowchart of the inventive segmentation - based x-ray image collimation area detection and anatomical area decomposition method.

### Description of Part References

**1000.** Segmentation - based x-ray image collimation area detection and anatomical area decomposition method
**1001.** Image subsampling
**1002.** Adding virtual collimation
**1003.** 3-center k-means segmentation
**1004.** Initial collimation mask detection and estimated collimation blade detection
**1005.** 2-center k-means segmentation of areas outside the estimated collimation blade
**1006.** Morphological structural element generation with adaptive variance thresholding
**1007.** Completion of 3-center segmentation areas with morphological image closure
**1008.** Anatomical direct exposure area decomposition by 2-center k-means segmentation

### Detailed Description of the Invention

In this detailed description, preferred embodiments of a method for novel segmentation - based x-ray image collimation area detection and anatomical area decomposition, are described only for the purpose of a better understanding of the subject matter.

Images from a digital x-ray imaging device consist of 3 different segments: direct exposure, non - collimated area and anatomical region. The methods commonly used in the literature for segmenting digital images are k-means and region growing algorithms. Theoretically, both methods can segment the 3 segments in x-ray images in a finite number of iterations with appropriate initial segment center estimates. However, in real - life test scenarios, the segmentation algorithms give low accuracy results due to the shooting position of the x-ray imaged, the medical equipment on the patient, etc. In addition, the resolution of the detector from which x-ray images are taken is increasing as the technology evolves, and the most common adult-sized detectors on the market consist of approximately 6-7 million pixels. Because of the iterative structure of the segmentation algorithms requires reprocessing of all the pixels in the x-ray image at each iteration step, this situation results in loss of processing time, processor resources and power consumption.

The incorrect results of segmentation algorithms are mainly due to the confusion of the anatomical area with the non-x-ray collimation area. When 2 segment centers (collimation area and non - collimation area) are tried to be found instead of 3 segment centers, although the direct exposure areas in the x-ray image are assigned to the correct segment, the anatomical area and collimation area are mixed with each other, this situation causes deep valleys in the segmented image according to the position and anatomical area of the patient.

In segmented images, certain holes, gaps or slits can be filled with appropriate structural elements by morphological image closing. However, the shapes formed as a result of segmentation with 2 segment centers in x-ray imaging do not have a fixed geometry and are highly variable. ${argmin}_{S} {\sum }_{i = 1}^{k} {\sum }_{x ∈ {S}_{i} , x ∈ K} {\left‖x-{μ}_{i}\right‖}^{2}$

The segmentation - based x-ray image collimation area detection and anatomical area decomposition method consists of k-means blocks cascaded consecutively, independent of the x-ray protocol, and morphological operation blocks used to regularize the segmentation results. The mathematical expression of the k-means algorithm is given in (1), wherein k denotes the number of segmentation centers, the subscript S (Si) (if applied) denotes the region regulated by morphological operations and segmented by the k-means algorithm, and the subscript µ ("µi") denotes the current segmentation center average pixel value. The flowchart of the segmentation - based x-ray image collimation area detection and anatomical area decomposition method is shown in the figure.

Subsampling is widely used in computer vision applications to optimize resource utilization. Although there is loss in the original data with subsampling, the relationship between pixels in the original image is largely preserved when subsampling is performed by means of an appropriate interpolation method. Because of the size of x-ray images consist of approximately 6-7 million pixels, the image from the x-ray detector is subsampled by bicubic interpolation with a ratio of 1 in 16. In this way, each pixel in the subsampled image also contains information about the 4-neighborhood in the original image.

Collimation area application is the management of limiting x-ray scattering used in x-ray imaging to reduce the dose received by the patient to be imaged. The unit that performs the collimation process in the x-ray machine is called the collimator and consists of 2 sets of lead blades, each pair moving in the same axis - in different directions. The collimation area is the part of the x-ray image that is not shadowed by the lead blades and appears as a polygon with at least four sides depending on the position of the x-ray detector. However, the collimation area is not mandatory and may be absent from the x-ray image at the discretion of the x-ray technician. In order to provide flexibility against different scenarios, the method identified in the figure adds a virtual non - collimation area consisting of "0" pixels on both axes of the subsampled image.

With the addition of virtual collimation, the subsampled x-ray image, which is known to consist of 3 segments (direct exposure, non - collimated area and anatomical region), is segmented with the 3-center k-means method, whose initial segmentation center values are adaptively determined according to the minimum and maximum values of the corresponding x-ray image. Direct exposure areas of the image obtained from segmentation can be obtained with high accuracy, but the accuracy of anatomy and non - collimation areas is quite low. The direct exposure and anatomy areas are combined to form the initial collimation area, and the initial collimation area mask is obtained by determining the points closest to the 4 corners of the x-ray image of this area. The initial collimation area mask is a quadrilateral with two opposite sides corresponding to the estimated positions of the collimation blades. The purpose of the 3-centered k-means block is to obtain direct exposure and anatomy areas in different segments, which are different from each other in terms of pixel brightness value distribution. When the 2-center k-means method is used, anatomy and non - collimation areas can be obtained in a single segment. In addition, the information that the direct exposure area alone carries about the collimation area is limited.

The 3-center k-means method and the resulting estimated collimation blades are an underestimation of the actual collimation mask. Direct exposure areas are easily separated due to their high x-ray exposure and the direct exposure - non - collimation area and direct exposure - anatomy boundaries obtained from 3-centered k-means are highly accurate. On the other hand, anatomy areas with no or little x-ray exposure and non - collimated area transitions are highly uncertain. As a result of 3-center k-means, only a fraction of anatomy areas can be segmented correctly. In order to add the missing anatomy areas to the collimation area mask, the areas outside the initial collimation area mask are segmented by 2-centered k-means method, whose initial segmentation center values are adaptively determined according to the minimum and maximum values of the masked x-ray image. In this way, anatomical areas that were erroneously included in the non - collimated area segmentation in the 3-centered k-means method where the initial segmentation was performed are detected. However, due to x-ray scattering, a small amount of x-rays may fall into the region outside the collimation area, and in this case, some areas in the non - collimation area approach the pixel values of the anatomical region. Therefore, in the 2-center k-means method, there is also a need to decompose between the blocks segmented as anatomical regions. In this context, the line equations determining the four edges of the area bounded by the estimated x-ray blades are used to divide the x-ray image into 4 non-intersecting regions. In each of the 4 regions, the 2-center k-means method is checked for the presence of a pixel segment found as an anatomical region. If there is an anatomical area block and the number of pixels and variance of the segment exceeds a dynamically determined threshold value, the anatomical block is added to the collimation area mask obtained by 3-centered k-means.

The majority of the collimation area mask is obtained with possible additions. However, the anatomical area additions made with the 2-center k-means method do not include the anatomical areas classified as non - collimation within the area formed by the estimated collimation blades of the collimation area mask. Since these gaps remain within the estimated collimation blades, it is not correct to include them directly in the collimation area since the collimation area may not be quadrilateral. Moreover, the edges of the collimation mask must be linear and there may be some residual areas due to segmentation. In order to close the segmentation gaps inside the estimated collimation blades and to impose linearity constraints on the edges of the collimation mask, the quadrilateral area bounded by the estimated collimation blades is defined as a structural element and morphological image closing is applied on the collimation mask. In this way, a collimation mask is obtained for the subsampled image.

The subsampled collimation mask is resized to the size of the x-ray image by bilinear interpolation at a ratio of 1 to 16. The reason for using bilinear interpolation unlike bicubic, as opposed to subsampling the original image, is that the collimation mask of 0's and 1's creates a transition band between 0 and 1 that does not exist when enlarging, this is not the case with bilinear interpolation. In order to segment the anatomical and direct exposure areas of the original image, which has been cleaned of non - collimated areas (if available), only the 2-center k-means method is used, in which the initial segmentation center values are adaptively determined by the minimum and maximum values of the masked x-ray image within the collimation mask of the original size.

Segmentation - based x-ray image collimation area detection and anatomical area decomposition method; image subsampling, virtual collimation addition, 3-center k-means segmentation, initial collimation mask detection and estimated collimation blade detection, 2-center k-means segmentation of areas outside the estimated collimation blade, morphological structural element generation with adaptive variance thresholding, completion of 3-center segmentation areas with morphological image occlusion, anatomical direct exposure area decomposition with 2-center k-means segmentation.

In the image subsampling processing step, the image from the detector is reduced at a ratio of 1 in 16 with bicubic interpolation to preserve the inter - pixel distribution as much as possible. This step of the method is performed for quick results and efficient use of processor resources.

In the virtual collimation addition process step, since it is not known whether the reduced x-ray image has been collimated or not, zero pixels are virtually added in both dimensions of the image. This step of the method guarantees that the x-ray image consists of 3 separate segments as direct exposure, non - collimated area and anatomical region, regardless of whether collimation is applied to the original x-ray image or not.

In the 3-center k-means segmentation process step, the reduced x-ray image, which is known to consist of 3 image segments, is given to the k-means algorithm, whose mathematical expression is given in (1). The number k in (1) is taken as the number of segment centers, 3. Each segment center represents the average pixel value of the pixels that will ultimately be classified as direct exposure, non - collimated area or anatomical region. The initial average pixel value of each segment center was calculated as a multiple of the minimum and maximum pixel value of the virtual collimated image (the coefficient of each segment is different). In each iteration of the K-means algorithm, the 1-distance (1-norm) of each pixel in the image to the 3 segment center values calculated in the previous iteration is checked. Each pixel is temporarily assigned to the segment with the smallest 1-norm. New segment center values for the next iteration are calculated from the average pixel values of the pixels temporarily assigned to each segment center in this iteration. The stopping criterion is that the segment center values remain constant for 2 consecutive iterations. This step of the algorithm aims to generate an image prior for the direct exposure, non - collimated area and anatomical region areas.

In the initial collimation mask detection and estimated collimation blade detection process step, the direct exposure and anatomical area segments found as a result of k-means are combined into a single image mask and the 4 points with the smallest Euclidean distance to the 4 corners of the x-ray image of this mask are determined. Two consecutive points are linearly connected to form the estimated collimation blades. This step of the method aims to obtain positional information on the segmentation areas to correct segmentation errors.

In the 2-center k-means segmentation of areas outside the estimated collimation blades, each of the estimated collimation blades drawn on the x-ray image in process step 1004 is expressed by a mathematical line equation. In total, 4-line equations corresponding to 4 edges divide the x-ray image into 4 regions. If there are pixels belonging to the collimation segment in these 4 regions, the 2-center k-means algorithm is run so that the initial center values in each region that meets this condition are a certain ratio of the minimum and maximum pixel values of the region.The 2-center k-means algorithm in this step works in the same way as the 3-center k-means algorithm in process step 1003, only the number of centers is reduced to 2. The aim of this step of the method is to complete the deficiencies in the collimation area of the collimation segment (direct exposure + anatomical area) obtained as a result of segmentation in process step 1003. The 2-centered k-means algorithm is used a maximum of 4 times to detect possible segmentation area deficiencies.

In the morphological structural element generation process step with adaptive variance thresholding, not all of the areas found in process step 1005 correspond to missing collimation areas. Due to the scattering of X-rays, non - collimation areas may also contain parts with a distribution similar to the anatomical area. In order not to add the extra areas to the collimation area, a variance value is calculated adaptively according to the pixel distributions of the anatomical area segment and the direct exposure area segment obtained at the end of process step 1003. Each possible collimation area (maximum 4 regions) outside the estimated collimation blades obtained at the end of process step 1005 is thresholded according to the adaptively calculated variance value, and those below the threshold are not included in the collimation mask. The areas above the threshold are merged with the initial collimation mask to form a new collimation mask. At the end of process step 1005, the boundaries of the collimation mask are largely completed after the possible collimated areas are eliminated by adaptive variance thresholding. However, due to the nature of the k-means algorithm used in process step 1003, there may be various gaps in the collimation mask. Moreover, the positional scattering of possible collimation areas found by the 2-centered k-means algorithm used in process step 1005 may not physically appropriate to the linear structure of the collimation blades. In order to eliminate these problems, after adaptive variance thresholding, new estimated collimation blades are created by redetermining the 4 corners of the collimation mask closest to the corners of the x-ray image. The area bounded by this rectangular structure is filled and converted into a binary structural element. With this structural element, a morphological image closing operation is applied on the collimation mask. In this way, linearity constraints are applied to the edges of the collimation area and the gaps inside the collimation mask are filled.

In the process step of completing 3-centered segmentation areas with morphological image closing, morphological image closing operation is applied on the collimation mask with the structural element created in process step 1006. In this way, the linearity constraint is applied to the edges of the collimation area and the gaps inside the collimation mask are filled. Thereafter, the binary image mask, which is the collimation mask, is enlarged to the original image size at a ratio of 1 to 16. While enlarging the binary image, bilinear interpolation is used in this part to avoid values between 0-1 pixels.

In the 2-centered k-means segmentation and anatomical direct exposure area decomposition process step, the collimation segment detection is completed with the original size collimation mask resulting from the process step 1007. As the last step of the method, according to the k-means algorithm in (1), a 2-centered k-means algorithm is run only within the collimation area mask. This method works in the same way as the 3-center k-means algorithm in process step 1003, only the number of centers is reduced to 2. Theoretically, the k-means algorithm in process step 1003 can also find 3 segments in total: direct exposure, non - collimated area and anatomical region. However, in real life applications (real x-ray images), the anatomical area and the non - collimation area are mixed together. For this reason, the task of finding the collimation area was staged and considered as a separate task. On the other hand, the decomposition of direct exposure and anatomy areas with the k-means algorithm is highly accurate.

### REFERENCES

**[1]** EP1501048B1, "METHOD OF SEGMENTING A RADIOGRAPHIC IMAGE INTO DIAGNOSTICALLY RELEVANT AND DIAGNOSTICALLY IRRELEVANT REGIONS"
**[2]** US5268967A, "METHOD FOR AUTOMATIC FOREGROUND AND BACKGROUND DETECTION IN DIGITAL RADIOGRAPHC IMAGES"
**[3]** US5629989A, "IMAGE LINE - SEGMENT EXTRACTING APPARATUS"
**[4]** US5901240A, "METHOD FOR DETECTING THE COLLIMATION FIELD IN A DIGITAL RADIOGRAPHY"

## Claims

1. A method of segmentation - based x-ray image collimation area detection and anatomical area decomposition, **comprising** the following process steps;
• downscaling and image subsampling of an x-ray image received from a detector to ensure that the inter - pixel distribution is preserved,
• adding a virtual non - collimation area consisting of zero pixels in both dimensions of the subsampled image and addition of virtual non-collimation in the reduced x-ray image,
• creation of an image prior for direct exposure, non - collimated area and anatomical region areas for a reduced x-ray image known to consist of 3 image segments, and realization of 3-center k-means segmentation, and **characterized by**
• determining an initial collimation mask by combining the direct exposure and anatomical area segments from k-means into a single image mask, determining the 4 points with the smallest Euclidean distance to the 4 corners of the x-ray image of the mask and linearly combining the points to generate estimated collimation blades corresponding to sides of the initial collimation mask,
• 2-center k-means segmentation of areas outside the estimated collimation blade, with the initial center values being at a certain ratio of the minimum and maximum pixel values of each region of 4 non-intersecting regions formed by division of the x-ray image by the estimated collimation blades, and completion of the collimation mask with the segments passing the threshold,
• creation of the new estimated collimation blades by redetermining the 4 closest corners to the corners of the x-ray image according to the pixel distributions of the obtained anatomical area segment and the direct exposure area segment, and generation of the morphological structural element with adaptive variance thresholding,
• performing a morphological image closing operation on the collimation mask with a structural element and completing the 3-center segmentation areas with morphological image occlusion,
• enlarging the collimation mask to a size of the x-ray image received from the detector, completing the collimation segment detection process with the enlarged collimation mask and decomposition of the anatomical area and direct exposure area by 2-center k-means segmentation.

## Patentansprüche

1. Verfahren zur segmentierungsbasierten Röntgenbildkollimationsbereichsdetektion und anatomischen Bereichszerlegung, **umfassend** die folgenden Vorgangsschritte;
• Verkleinern und Bildunterabtasten eines von einem Detektor empfangenen Röntgenbildes, um sicherzustellen, dass die Interpixelverteilung erhalten bleibt,
• Hinzufügen eines virtuellen Nichtkollimationsbereichs, der aus null Pixeln besteht, in beiden Dimensionen des unterabgetasteten Bildes und Hinzufügung von virtueller Nichtkollimation in dem reduzierten Röntgenbild,
• Erstellung eines Bildes vor für direkten Expositions-, nicht kollimierten Bereich und anatomische Regionenbereiche für ein reduziertes Röntgenbild, das bekanntermaßen aus 3 Bildsegmenten besteht, und Realisierung einer 3-Zentren-k-Means-Segmentierung, und **gekennzeichnet durch**
• Bestimmen einer anfänglichen Kollimationsmaske durch Kombinieren der Segmente der direkten Exposition und des anatomischen Bereichs aus k-Means zu einer einzigen Bildmaske, Bestimmen der 4 Punkte mit dem kleinsten euklidischen Abstand zu den 4 Ecken des Röntgenbildes der Maske und lineares Kombinieren der Punkte, um geschätzte Kollimationsklingen zu generieren, die Seiten der anfänglichen Kollimationsmaske entsprechen,
• 2-Zentren-k-Means-Segmentierung von Bereichen außerhalb der geschätzten Kollimationsklinge, wobei die anfänglichen Zentrumwerte in einem bestimmten Verhältnis der minimalen und maximalen Pixelwerte jeder Region von 4 sich nicht schneidenden Regionen stehen, die durch Teilung des Röntgenbildes durch die geschätzten Kollimationsklingen und Vervollständigung der Kollimationsmaske mit den Segmenten ausgebildet werden, die den Schwellenwert überschreiten,
• Erstellung der neuen geschätzten Kollimationsklingen durch erneutes Bestimmen der 4 den Ecken des Röntgenbildes am nächsten liegenden Ecken gemäß den Pixelverteilungen des erlangten anatomischen Bereichssegments und des direkten Expositionsbereichssegments und Generierung des morphologischen Strukturelements mit adaptiver Varianzschwellwertbildung,
• Durchführen einer morphologischen Bildschlussoperation an der Kollimationsmaske mit einem Strukturelement und Vervollständigen der 3-Zentren-Segmentierungsbereiche mit morphologischer Bildverdeckung,
• Vergrößern der Kollimationsmaske auf eine Größe des von dem Detektor empfangenen Röntgenbildes, Vervollständigen des Kollimationssegmentdetektionsvorgangs mit der vergrößerten Kollimationsmaske und Zerlegen des anatomischen Bereichs und des direkten Expositionsbereichs durch 2-Zentren-k-Means-Segmentierung.

## Revendications

1. Procédé de détection de zone de collimation d'image radiographique basée sur une segmentation et décomposition de zone anatomique, **comprenant** les étapes de processus suivantes ;
• la réduction d'échelle et le sous-échantillonnage d'une image radiographique reçue en provenance d'un détecteur pour assurer la préservation de la distribution inter-pixels,
• l'ajout d'une zone virtuelle de non-collimation constituée de zéro pixel dans les deux dimensions de l'image sous-échantillonnée et l'ajout d'une non-collimation virtuelle dans l'image radiographique réduite,
• la création d'une image préalable pour une exposition directe, de zones non collimatées et de zones de la région anatomique pour une image radiographique réduite connue pour être constituée de 3 segments d'image, et la réalisation d'une segmentation par k-moyennes à 3 centres, et **caractérisé par**
• la détermination d'un masque de collimation initial en combinant les segments d'exposition directe et de zone anatomique à partir des k-moyennes en un seul masque d'image, la détermination des 4 points avec la plus petite distance euclidienne aux 4 coins de l'image radiographique du masque et la combinaison linéaire des points pour générer des lames de collimation estimées correspondant à des côtés du masque de collimation initial,
• la segmentation par k-moyennes à 2 centres de zones à l'extérieur de la lame de collimation estimée, les valeurs initiales du centre étant à un certain rapport des valeurs minimales et maximales de pixels de chaque région de 4 régions non sécantes formées par la division de l'image radiographique par les lames de collimation estimées, et l'achèvement du masque de collimation avec les segments passant le seuil,
• la création des nouvelles lames de collimation estimées en redéterminant les 4 coins les plus proches des coins de l'image radiographique selon les distributions de pixels du segment de zone anatomique obtenu et du segment de zone d'exposition directe, et la génération de l'élément de structure morphologique avec seuillage de variance adaptatif,
• la réalisation d'une opération de fermeture de l'image morphologique sur le masque de collimation avec un élément structurel et l'achèvement des zones de segmentation à 3 centres par une occlusion d'image morphologique,
• l'agrandissement du masque de collimation à une taille de l'image radiographique reçue en provenance du détecteur, l'achèvement du processus de détection du segment de collimation avec le masque de collimation agrandi et la décomposition de la zone anatomique et de la zone d'exposition directe par segmentation par k-moyennes à 2 centres.
